(19) Europäisches Patentamt
European Patent Office
Office européen des brevets

(11) EP 2 213 479 B1

(12) **EUROPEAN PATENT SPECIFICATION**

(45) Date of publication and mention of the grant of the patent:
**17.10.2012 Bulletin 2012/42**

(21) Application number: **08849083.4**

(22) Date of filing: **31.10.2008**

(51) Int Cl.:
***B60C 9/18*** *(2006.01)* ***B60C 9/20*** *(2006.01)*

(86) International application number:
**PCT/JP2008/069899**

(87) International publication number:
**WO 2009/063759 (22.05.2009 Gazette 2009/21)**

(54) **RADIAL TIRE FOR AIRCRAFT**

GÜRTELREIFEN FÜR FLUGZEUG

PNEU RADIAL POUR AÉRONEF

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.11.2007 JP 2007293435**

(43) Date of publication of application:
**04.08.2010 Bulletin 2010/31**

(73) Proprietor: **Bridgestone Corporation**
**Tokyo 104-8340 (JP)**

(72) Inventor: **YANO, Takeshi**
**Kodaira-shi**
**Tokyo 187-8531 (JP)**

(74) Representative: **Oxley, Robin John George**
**Marks & Clerk LLP**
**90 Long Acre**
**London**
**WC2E 9RA (GB)**

(56) References cited:
**WO-A1-2006/075455**
**JP-A- 61 196 803**
**JP-A- 61 196 804**
**JP-A- 2007 182 103**
**JP-T- 2004 504 212**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 213 479 B1

Printed by Jouve, 75001 PARIS (FR)

## Description

### TECHNICAL FIELD

The present invention relates to a radial tire for an aircraft and more particularly to a radial tire for an aircraft which intends to improve pressure resistance.

### RELATED ART

High-level demands for safety have been made on a radial tire for an aircraft and it is necessary for a tire to have pressure resistance not less than four times of regular internal pressure.

In order to meet such demands, a radial tire for an aircraft secures its pressure resistance by arranging a carcass serving as a framework and toroidally extending between a pair of bead portions, and a belt on a radially outer side of the carcass and consisting of a plurality of belt layers consisting of plies having a plurality of cords coated with rubber.

As such a radial tire for an aircraft, WO2003/061991 discloses a tire capable of restraining radial expansion of the tire without increase in the number of belt layers by using a belt consisting of belt layers having different kinds of organic fiber cords and by lowering total strength of the belt layers at 2/3 position of the maximum width of the belt than total strength of the belt layers at the tire equatorial plane.

However, since, in recent years, a radial tire for an aircraft grows in size and is applied with higher internal pressure, it is deniable that the tire with the number of belt layers of the above-mentioned technique is lack of strength of the belt. Therefore, the number of belt layers tends to be more increased than ever in order to restrain radial expansion of the tire.

For example, when a new tire is developed with increase in size of a radial tire for an aircraft, increase in the number of belt layers having the same kind of organic fiber cords is tried in order to improve pressure resistance of the tire.

### DISCLOSURE OF THE INVENTION

### PROBLEMS TO BE SOLVED BY THE INVENTION

However, even if the number of belt layers is merely increased and pressure resistance is improved for the increase of the number of belt layers, increase in tire weight becomes a problem.

It is, therefore, an object of the present invention to propose a belt structure capable of sufficiently satisfying demands for recent high pressure resistance without increase in tire weight.

### MEANS FOR SOLVING THE PROBLEM

The inventor made a detailed study to achieve the above-mentioned object and newly found that, when a tire is applied with high internal pressure, a belt layer disposed on a radially inner side is elongated differently from a belt layer disposed on a radially outer side and the above-mentioned object can be achieved by reducing such difference. That is to say, when a tire is applied with high internal pressure, rubber of belt layers is elongated in the tire circumferential and widthwise directions due to radial expansion of a tire and then, a rubber gauge between belt layers is decreased. The inventor found out that cords constituting belt layers are differently elongated and the above-mentioned object can be achieved by improving this phenomenon.

The above-mentioned phenomenon will be further explained in detail with reference to drawings. Fig. 1 is a view showing partially enlarged belt layers before and after a tire is applied with internal pressure.

Assuming that, when an inside of a tire is not filled with air, the shortest distance from a tire rotation axis (not shown) to a line segment parallel to the axis in the center of the belt layer disposed on the radially inner side of the belt is D1 and the shortest distance from the axis to a line segment parallel to the axis in the center of the belt layer disposed on the radially outer side of the belt is D2, the above-mentioned shortest distances when the inside of the tire is filled with air are respectively D1+ $\Delta 1$ and D2+ $\Delta 2$.

When the tire is applied with internal pressure, a distance between belt layers, that is, a distance between respective cords of belt layers is narrowed and a distance $\delta def$ between cords when the tire is not applied with internal pressure in Fig. 1 and a distance $\delta inf$ between cords when the tire is applied with internal pressure satisfy the relationship $\delta def > \delta inf$.

The distance $\delta inf$ between cords when the tire is applied with internal pressure is narrower than $\delta def$ because the increases in the respective shortest distances are different, which results in $\Delta 1 > \Delta 2$. As just described, $\Delta 1$ becomes larger than $\Delta 2$, which means that cords constituting the belt layer disposed on the radially inner side are differently elongated from cords constituting the belt layer disposed on the radially outer side. As a result, the belt layers are differently elongated. In other words, the belt layer disposed on the radially inner side is more elongated.

As for the timing when a tire is broken, that is, when any belt layers constituting a belt is broken, a relationship between tension and an elongation ratio of a conventional belt layer is shown in Fig. 2. In the figure, Bin shows a belt layer disposed on radially inner side and Bout shows a belt layer disposed on radially outer side. Amax shows an elongation ratio when the belt layer Bin is broken, namely elongation at break, and the tension at that time is Tmax. In addition, an elongation ratio of the belt layer Bout when the belt layer Bin is broken is A and the tension at that time is T.

It is found from Fig. 2 that by comparing two belt layers having the same specifications, when the tire is broken, the belt layer Bin is broken due to a limit of cord strength while the belt layer Bout does not reach a limit of cord strength. In other words, when the belt layer Bin is broken, the belt layer Bout can afford an extra elongation ratio and tension until the belt layer Bout is broken ($\Delta A$ and $\Delta T$ respectively show an extra elongation ratio and tension in the figure). Thus, the tire is broken while the belt layer Bout does not give the best performance. It is understood from the above results that the ability of the belt layer Bout is not utilized to the maximum.

Therefore, based on the above-mentioned knowledge, the inventor studied a method for bringing out each belt layer constituting a belt to the maximum and obtaining desired pressure resistance without increase in tire weight and found that it is effective for improving pressure resistance without increase in tire weight to appropriately adjust elongation at break of each belt layer constituting a belt from the radially inner to outer directions. The present invention is based on the above-mentioned knowledge.

The subject matter of the present invention is as follows.

(1) A radial tire for an aircraft having a carcass serving as a framework and toroidally extending between a pair of bead portions, and a belt disposed on a radially outer side of the carcass and consisting of at least two belt layers consisting of plies having a plurality of organic fiber cords coated with rubber, wherein the belt is configured in such a manner that elongation at break Lout of a radially outermost belt layer is smaller than elongation at break Lin of a radially innermost belt layer, a ratio Lout/Lin satisfies the relationship $0.8 < Lout/Lin < 0.95$, and elongation at break of a radially outer belt layer is not more than elongation at break of a radially inner belt layer between respective radially adjacent belt layers.

(2) The radial tire for an aircraft according to the above (1), wherein elongation at break lin of the organic fiber cords constituting the radially innermost belt layer of the belt and elongation at break lout of the organic fiber cords constituting the radially outermost belt layer satisfy the relationship $0.8 < lout/lin < 0.95$.

(3) The radial tire for an aircraft according to the above (1) or (2), wherein the belt is formed by layering at least two belt layers consisting of plies having a plurality of organic fiber cords coated with rubber in such a manner that the organic fiber cords intersect with each other between the belt layers, and an inclination angle with respect to a tire equatorial plane of the organic fiber cords constituting a radially outer belt layer is not more than an inclination angle with respect to the tire equatorial plane of the organic fiber cords constituting a radially inner belt layer between respective radially adjacent belt layers.

(4) The radial tire for an aircraft according to any one of the above (1) to (3), wherein the number of twist turns of the organic fiber cords constituting a radially outer belt layer is not more than the number of twist turns of the organic fiber cords constituting a radially inner belt layer between respective radially adjacent belt layers.

According to the present invention, in a belt consisting of at least two belt layers consisting of plies having a plurality of organic fiber cords coated with rubber, elongation at break of a radially outermost belt layer is smaller than elongation at break of a radially innermost belt layer, a ratio of elongation at break of the both of the belt layers is adjusted, and elongation at break of a radially outer belt layer is not more than elongation at break of a radially inner belt layer between respective radially adjacent belt layers to bring out the ability of each belt layer to the maximum so that a belt structure capable of sufficiently satisfying demands for recent high pressure resistance without increase in tire weight can be provided. As a result, a radial tire for an aircraft obtaining desired pressure resistance can be provided.

## BRIEF DESCRIPTION OF THE DRAWINGS

[Fig. 1] Fig. 1 is a view showing partially enlarged belt layers before and after a tire is applied with internal pressure.
[Fig. 2] Fig. 2 is a view showing a relationship between tension and an elongation ratio of a belt layer according to a conventional example.
[Fig. 3] Fig. 3 is a view showing a widthwise section of a radial tire for an aircraft according to the present invention.
[Fig. 4] Fig. 4 is a view showing a relationship between tension and an elongation ratio of a belt layer according to the present invention.

[Fig. 5] Fig. 5 is a view showing change of the number of twist turns of cords.
[Fig. 6] Fig. 6 is a view showing an example of a belt.

DESCRIPTION OF REFERENCE NUMERALS

| | |
|---|---|
| 1 | bead core |
| 2 | carcass |
| 3a-3d | belt layer |
| 4 | belt |
| 5 | belt protecting layer |
| 6 | tread |
| 7 | tire |
| 8 | strip-shaped ply |

BEST MODE FOR CARRYING OUT THE INVENTION

Hereinafter, the present invention will be specifically explained. Fig. 3 shows a widthwise sectional view of a pneumatic tire according to the present invention. In Fig. 3, a reference numeral 1 denotes a bead core, a reference numeral 2 denotes a carcass toroidally extending between the bead cores 1 and reference numerals 3a - 3d denote belt layers disposed on the radially outer side of the carcass 2 and layered sequentially. A belt 4 is formed by these belt layers 3a - 3d. In addition, a reference numeral 5 denotes a belt protecting layer disposed on the radially outer side of the belt 4, a reference numeral 6 denotes a tread disposed on the further radially outer side of the belt protecting layer 5 and a reference numeral 7 denotes a whole tire.

The belt 4 is formed by layering at least two belt layers, four belt layers 3a - 3d, the width of which is narrowed from the radially inner to outer direction of the belt 4 in this figure, consisting of plies having a plurality of organic fiber cords coated with rubber. Elongation at break Lout of the radially outermost belt layer 3d is smaller than elongation at break Lin of the radially innermost belt layer 3a and a ratio Lout/Lin satisfies the relationship 0.8 < Lout/Lin < 0.95. In addition, elongation at break of a radially outer belt layer is not more than elongation at break of a radially inner belt layer between respective radially adjacent belt layers. That is to say, elongation at break of the belt layer 3b is not more than elongation at break of the belt layer 3a, elongation at break of the belt layer 3c is not more than elongation at break of the belt layer 3b and elongation at break of the belt layer 3d is not more than elongation at break of the belt layer 3c.

Here, elongation at break of the belt layer means an elongation ratio at break L of the belt layer in the circumferential direction and can be calculated from elongation at break 1 [%] of organic fiber cords constituting the belt layer. That is to say, an elongation ratio at break L of the belt layer can be calculated from the following equation (1).

$$L=\left(\sqrt{\sin^2\alpha-(1+1/100)^2}/\cos\alpha-1\right)\times 100 \cdots\cdots (1)$$

Elongation at break 1 of organic fiber cords is measured by the tensile test compliant with JISL1017 and $\alpha$ means an inclination angle of cords with respect to the tire equatorial plane.

Thus, elongation at break of the belt layer can be increased or decreased by changing at least one of elongation at break 1 of cords and an inclination angle $\alpha$ of cords.

Fig. 4 shows a relationship between an elongation ratio and tension of a belt layer when a tire having a belt structure in which elongation at break of a belt layer is appropriately adjusted according to the present invention is broken. As shown in this figure, though the belt layer Bout and the belt layer Bin have a different limit of an elongation ratio and tension, it is found that the belt layer Bout and the belt layer Bin are broken at the same time when the tire is broken. That is to say, by lowering elongation at break Amax2 of the belt layer Bout than elongation at break Amax1 of the belt layer Bin, elongation limit Amax1 of the belt layer Bin applied with higher pressure than the belt layer Bout is higher than elongation limit Amax2 of the belt layer Bout, and therefore, the belt layer Bin is not broken earlier but can be broken in synchronization with the belt layer Bout being broken. Therefore, the belt layer Bin can afford tension up to Tmax1 and the belt layer Bout similarly can afford tension up to Tmax2 so that tension of the belt layer Bout, which cannot be conventionally used up can be used up.

In addition, the ratio Lout/Lin satisfies the relationship 0.8 < Lout/Lin < 0.95 so that it is possible to improve the ability of the belt as a whole.

As a result, each of the belt layers 3a - 3d can be utilized to the maximum so that it is possible to improve pressure resistance without increasing the layer number of belt layers.

It is noted that the structure and the layer number of the belt shown in the widthwise sectional view of a tire of Fig. 3 are not particularly limited but can be appropriately adjusted as long as the advantageous effects of the present invention can be obtained.

It is preferable that elongation at break lin of the organic fiber cords constituting the radially innermost belt layer and elongation at break lout of the organic fiber cords constituting the radially outermost belt layer satisfy the relationship 0.8 < lout/lin < 0.95. That is to say, in order to further obtain the advantageous effects of the present invention by adjusting elongation at break of the organic fiber cords constituting the radially innermost belt layer and the radially outermost belt layer, it is preferable that the ratio lout/lin is in a range of 0.8 < lout/lin < 0.95.

In case that the belt is formed by layering at least two belt layers consisting of plies having a plurality of organic fiber cords coated with rubber in such a manner that the organic fiber cords intersect with each other between the belt layers, it is preferable that an inclination angle with respect to the tire equatorial plane of the organic fiber cords constituting a radially outer belt layer is not more than an inclination angle with respect to the tire equatorial plane of the organic fiber cords constituting a radially inner belt layer between respective radially adjacent belt layers.

That is to say, by making an inclination angle with respect to the tire equatorial plane of the organic fiber cords constituting a radially outer belt layer be not more than an inclination angle with respect to the tire equatorial plane of the organic fiber cords constituting a radially inner belt layer, it is possible to reduce elongation at break in tire circumferential direction from a radially inner belt layer to a radially outer belt layer and to break the organic fiber cords constituting the radially inner and outer belt layers at the same time when the tire is broken by high internal pressure. In other words, performance of the cords can be further utilized.

It is preferable that an inclination angle with respect to the tire equatorial plane of the organic fiber cords is within a range between 0 degrees and 45 degrees. If the angle exceeds 45 degrees, the belt relatively reduces its stiffness in the circumferential direction and cannot sufficiently function as a member supporting water pressure in the water pressure test to be described below.

It is preferable that the number of twist turns of the organic fiber cords constituting a radially outer belt layer is not more than the number of twist turns of the organic fiber cords constituting a radially inner belt layer between respective radially adjacent belt layers. In general, as shown in Fig. 5, when the number of twist turns of cords is decreased (C3>C2>C1), as elongation at break of cords is decreased (A3>A2>A1), tension of cords tends to be increased (T3<T2<T1). That is to say, by making a radially outer belt layer have organic fiber cords having the number of twist turns of not more than that of organic fiber cords constituting a radially inner belt layer, cord strength is increased and elongation at break of the radially outermost belt layer can be preferably decreased. It is noted that the above-mentioned number of twist turns means the number of upper twist turns.

## EXAMPLE

Pneumatic tires having a size of 46x17R20-30PR and various specifications shown in Table 1 are produced. Each tire is mounted on a normal rim according to TIRE and RIM Association (TRA) and weight and pressure resistance of each tire are investigated. Pressure resistance of a tire is investigated as a factor of safety (pressure at break). The results are shown in Table 1.

A zigzag endless belt, as shown in Fig. 6a, formed by spirally winding a strip-shaped ply 8 which is curved in a zigzag manner, multiple times in the circumferential direction and a circumferential spiral belt, as shown in Fig. 6b, formed by spirally winding a strip-shaped ply 8 in the circumferential direction in such a manner that the ply 8 is slightly inclined with respect to the tire equator are used as a belt. The dashed lines in the strip-shaped plies 8 in Figs. 6a and 6b show cords. In Table 1, A means a zigzag endless belt and B means a circumferential spiral belt.

Pressure resistance of each tire is evaluated by investigating a factor of safety (pressure at break). The factor of safety (pressure at break) is investigated by the water pressure test, in which water is filled in a tire and its water pressure is gradually increased up to the timing when the tire is broken. The investigated value shows the ratio of water pressure when the tire is broken to the specified internal pressure. It is defined in TSO-c62e (Technical Standard Order) which is a standard of FAA (Federal Aviation Administration) in the United States of America that a tire must have pressure resistance not less than four times of regular internal pressure.

[Table 1]

| | | Conventional Example 1 | | | Conventional Example 2 | | | | Example 1 | | Example 2 | | | Example 3 | | | Comparative Example 1 | | Comparative Example 2 | | Comparative Example 3 | | |
|---|---|---|---|---|---|---|---|---|---|---|---|---|---|---|---|---|---|---|---|---|---|---|---|
| Carcass | Material | Nylon | | | Nylon | | | | Nylon | | Nylon | | | Nylon | | | Nylon | | Nylon | | Nylon | | |
| | Layer number | 6 | | | 6 | | | | 6 | | 6 | | | 6 | | | 6 | | 6 | | 6 | | |
| | Cord | 1400dtex /2/2 | | | 1400dtex /2/2 | | | | 1400dtex /2/2 | | 1400dtex /2/2 | | | 1400dtex /2/2 | | | 1400dtex /2/2 | | 1400dtex /2/2 | | 1400dtex /2/2 | | |
| Belt*1) | Material | Aramid | | | Nylon | | | | Aramid | | Nylon | | | Nylon | | | Aramid | | Aramid | | Nylon | | |
| | Layer number | 1400dtex /2/2 | | | 1400dtex /2/2 | | | | 1400dtex /2/2 | | 1400dtex /2/2 | | | 1400dtex /2/2 | | | 1400dtex /2/2 | | 1400dtex /2/2 | | 1400dtex /2/2 | | |
| | Cord | 6 | | | 8 | | | | 4 | | 6 | | | 6 | | | 4 | | 4 | | 6 | | |
| | Belt No.*2) | 1/2 | 3/4 | 5/6 | 1/2 | 3/4 | 5/6 | 7/8 | 1/2 | 3/4 | 1/2 | 3/4 | 5/6 | 1/2 | 3/4 | 5/6 | 1/2 | 3/4 | 1/2 | 3/4 | 1/2 | 3/4 | 5/6 |
| | Belt type*3) | B | B | B | A | A | A | A | B | B | A | A | B | A | A | A | B | B | B | B | A | A | A |
| | Angle (deg.)*4) | 0 | 0 | 0 | 10 | 10 | 10 | 10 | 0 | 0 | 10 | 5 | 0 | 10 | 10 | 10 | 0 | 0 | 0 | 0 | 10 | 10 | 10 |
| | Number of twist turns (index)*5) | 100 | 100 | 100 | 100 | 100 | 100 | 100 | 100 | 80 | 100 | 100 | 100 | 100 | 95 | 90 | 100 | 100 | 100 | 70 | 100 | 100 | 100 |
| | Cord strength (index)*6) | 100 | 100 | 100 | 65 | 65 | 65 | 65 | 100 | 107 | 65 | 65 | 65 | 65 | 67 | 70 | 100 | 100 | 100 | 109 | 65 | 65 | 65 |
| | Elongation at break of cords (%) | 7.5 | 7.5 | 7.5 | 20.4 | 20.4 | 20.4 | 20.4 | 7.5 | 6.3 | 20.4 | 20.4 | 20.4 | 20.4 | 19.6 | 18.8 | 7.5 | 7.5 | 7.5 | 5.6 | 20.4 | 20.4 | 20.4 |
| | Elongation at break of belt layer (%) | 7.5 | 7.5 | 7.5 | 23.5 | 23.5 | 23.5 | 23.5 | 7.5 | 6.3 | 23.5 | 21.2 | 20.4 | 23.5 | 22.7 | 21.9 | 7.5 | 7.5 | 7.5 | 5.6 | 23.5 | 23.5 | 23.5 |
| | Lout | 7.5 | | | 23.5 | | | | 6.3 | | 20.4 | | | 21.9 | | | 7.5 | | 5.6 | | 23.5 | | |
| | Lin | 7.5 | | | 23.5 | | | | 7.5 | | 25.2 | | | 23.5 | | | 7.5 | | 7.5 | | 23.5 | | |
| | Lout/Lin | 1 | | | 1 | | | | 0.84 | | 0.81 | | | 0.93 | | | 1 | | 0.75 | | 1 | | |
| | lout | 7.5 | | | 20.4 | | | | 6.3 | | 20.4 | | | 18.8 | | | 7.5 | | 5.6 | | 20.4 | | |
| | lin | 7.5 | | | 20.4 | | | | 7.5 | | 20.4 | | | 20.4 | | | 7.5 | | 7.5 | | 20.4 | | |
| | lout/lin | 1 | | | 1 | | | | 0.84 | | 1 | | | 0.92 | | | 1 | | 0.75 | | 1 | | |
| Performance | Weight (index)*7) | 104 | | | 110 | | | | 98 | | 100 | | | 100 | | | 96 | | 96 | | 100 | | |
| | Factor of safety (pressure at break)*8) | 5.6 | | | 4.6 | | | | 4.2 | | 4.1 | | | 4.1 | | | 3.7 | | 3.9 | | 3.5 | | |

*1) A belt is a set with two layers.

*2) The first belt, the second belt, ... are sequentially layered in the radially inner to outer direction of a belt.

*3) As a belt type, Fig. 6a shows a zigzag endless belt and Fig. 6b shows a circumferential spiral belt.

*4) An inclination angle of cords with respect to the tire equator.

*5) An upper twist coefficient of Conventional Example tire 1 is defined as 100.

*6) Cord strength (index) of Conventional Example tire 1 is defined as 100.

*7) Tire weight (index) of Example tire 2 is defined as 100.

*8) A tire is mounted on a rim and the tire inside is filled with water for pressure rising. A ratio of water pressure when the tire is broken to the specified internal pressure. At least 4 times are determined in a public standard.

It is found from Table 1 that Example tires improve the factor of safety (pressure at break) in comparison with those of Comparative Example tires 1 to 3. In addition, it is found that Example tires can restrain increase in tire weight in comparison with Conventional Example tires. Accordingly, it is found that a radial tire for an aircraft according to the present invention reduces its weight more than that of Conventional Example tires and improves pressure resistance (factor of safety (pressure at break)) than that of Comparative Example tires.

## Claims

1. A radial tire for an aircraft having
a carcass serving as a framework and toroidally extending between a pair of bead portions, and
a belt disposed on a radially outer side of the carcass and consisting of at least two belt layers consisting of plies having a plurality of organic fiber cords coated with rubber, wherein
the belt is configured in such a manner that
elongation at break Lout of a radially outermost belt layer is smaller than elongation at break Lin of a radially innermost belt layer,
a ratio Lout/Lin satisfies the relationship 0.8 < Lout/Lin < 0.95, and elongation at break of a radially outer belt layer is not more than elongation at break of a radially inner belt layer between respective radially adjacent belt layers.

2. The radial tire for an aircraft according to claim 1, wherein
elongation at break lin of the organic fiber cords constituting the radially innermost belt layer of the belt and elongation at break lout of the organic fiber cords constituting the radially outermost belt layer satisfy the relationship 0.8 < lout/lin < 0.95.

3. The radial tire for an aircraft according to claim 1 or 2, wherein
the belt is formed by layering at least two belt layers consisting of plies having a plurality of organic fiber cords coated with rubber in such a manner that the organic fiber cords intersect with each other between the belt layers, and an inclination angle with respect to a tire equatorial plane of the organic fiber cords constituting a radially outer belt layer is not more than an inclination angle with respect to the tire equatorial plane of the organic fiber cords constituting a radially inner belt layer between respective radially adjacent belt layers.

4. The radial tire for an aircraft according to any one of claims 1 to 3, wherein
the number of twist turns of the organic fiber cords constituting a radially outer belt layer is not more than the number of twist turns of the organic fiber cords constituting a radially inner belt layer between respective radially adjacent belt layers.

## Patentansprüche

1. Gürtelreifen für ein Flugzeug mit:

   einer Karkasse, die als Gerüst dient und sich ringförmig zwischen einem Paar Wulstabschnitten erstreckt, und
   einem Gürtel, der auf der radial äußeren Seite der Karkasse angeordnet ist und aus zumindest zwei Gürtelschichten besteht, die aus Lagen mit einer Mehrzahl von organischen Faserschnüren bestehen, die mit Kautschuk beschichtet sind, wobei
   der Gürtel derart konfiguriert ist, dass
   eine Dehnung bei Bruch Lout einer radial äußersten Gürtelschicht kleiner als eine Dehnung bei Bruch Lin einer radial innersten Gürtelschicht ist,
   ein Verhältnis Lout/Lin der Beziehung 0,8 < Lout/Lin < 0,95 entspricht, und
   eine Dehnung bei Bruch einer radial äußeren Gürtelschicht nicht größer als eine Dehnung bei Bruch einer radial inneren Gürtelschicht zwischen jeweiligen radial benachbarten Gürtelschichten ist.

2. Gürtelreifen für ein Flugzeug nach Anspruch 1, wobei
eine Dehnung bei Bruch lin der organischen Faserschnüre, die die radial innerste Gürtelschicht des Gürtels darstellen, und eine Verlängerung bei Bruch lout der organischen Faserschnüre, die die radial äußerste Gürtelschicht darstellen, der Beziehung 0,8 < lout/lin < 0,95 entsprechen.

3. Gürtelreifen für ein Flugzeug nach Anspruch 1 oder 2, wobei

der Gürtel gebildet ist, indem zumindest zwei Gürtelschichten, die aus Lagen mit einer Mehrzahl von organischen Faserschnüren bestehen, die mit Kautschuk beschichtet sind, derart geschichtet werden, dass die organischen Faserschnüre zwischen den Gürtellagen einander überschneiden, und
ein Neigungswinkel in Bezug auf eine äquatoriale Ebene des Reifens der organischen Faserschnüre, die eine radial äußere Gürtelschicht darstellen, nicht größer als ein Neigungswinkel in Bezug auf die äquatoriale Ebene des Reifens der organischen Faserschnüre, die eine radial innere Gürtelschicht darstellen, zwischen jeweiligen radial benachbarten Gürtelschichten ist.

**4.** Gürtelreifen für ein Flugzeug nach einem der Ansprüche 1 bis 3, wobei
die Anzahl von Verdrehungen der organischen Faserschnüre, die eine radial äußere Gürtelschicht darstellen, nicht höher als die Anzahl von Verdrehungen der organischen Faserschnüre, die eine radial innere Gürtelschicht darstellen, zwischen jeweiligen radial benachbarten Gürtelschichten ist.

## Revendications

**1.** Pneu radial pour un aéronef ayant :

une carcasse servant de bâti et s'étendant de manière toroïdale entre une paire de parties de talon, et
une ceinture disposée sur un côté radialement externe de la carcasse et se composant d'au moins deux couches de ceinture se composant de plis ayant une pluralité de cordes de fibre organique recouvertes avec du caoutchouc, dans lequel :

la ceinture est configurée de sorte que :

l'allongement à la rupture Lout d'une couche de ceinture située radialement le plus à l'extérieur est inférieur à l'allongement à la rupture Lin d'une couche de ceinture située radialement le plus à l'intérieur, un rapport Lout/Lin satisfait la relation 0,8 < Lout/Lin < 0,95, et
l'allongement à la rupture d'une couche de ceinture radialement externe n'est pas supérieur à l'allongement à la rupture d'une couche de ceinture radialement interne entre les couches de ceinture radialement adjacentes respectives.

**2.** Pneu radial pour un aéronef selon la revendication 1, dans lequel :

l'allongement à la rupture lin des cordes de fibre organique constituant la couche de ceinture située radialement le plus à l'intérieur de la ceinture et l'allongement à la rupture lout des cordes de fibre organique constituant la couche de ceinture située radialement le plus à l'extérieur satisfont la relation 0,8 < lout/lin < 0,95.

**3.** Pneu radial pour un aéronef selon la revendication 1 ou 2, dans lequel :

la ceinture est formée en déposant en couche au moins deux couches de ceinture se composant de plis ayant une pluralité de cordes de fibre organique recouvertes avec du caoutchouc de sorte que les cordes de fibre organique se coupent entre elles entre les couches de ceinture, et
un angle d'inclinaison par rapport au plan équatorial du pneu des cordes de fibre organique constituant une couche de ceinture radialement externe n'est pas supérieur à un angle d'inclinaison par rapport au plan équatorial du pneu des cordes de fibre organique constituant une couche de ceinture radialement interne entre les couches de ceinture radialement adjacentes respectives.

**4.** Pneu radial pour un aéronef selon l'une quelconque des revendications 1 à 3, dans lequel :

le nombre de tours de torsion des cordes de fibre organique constituant une couche de ceinture radialement externe n'est pas supérieur au nombre de tours de torsion des cordes de fibre organique constituant une couche de ceinture radialement interne entre les couches de ceinture radialement adjacentes respectives.

FIG. 1

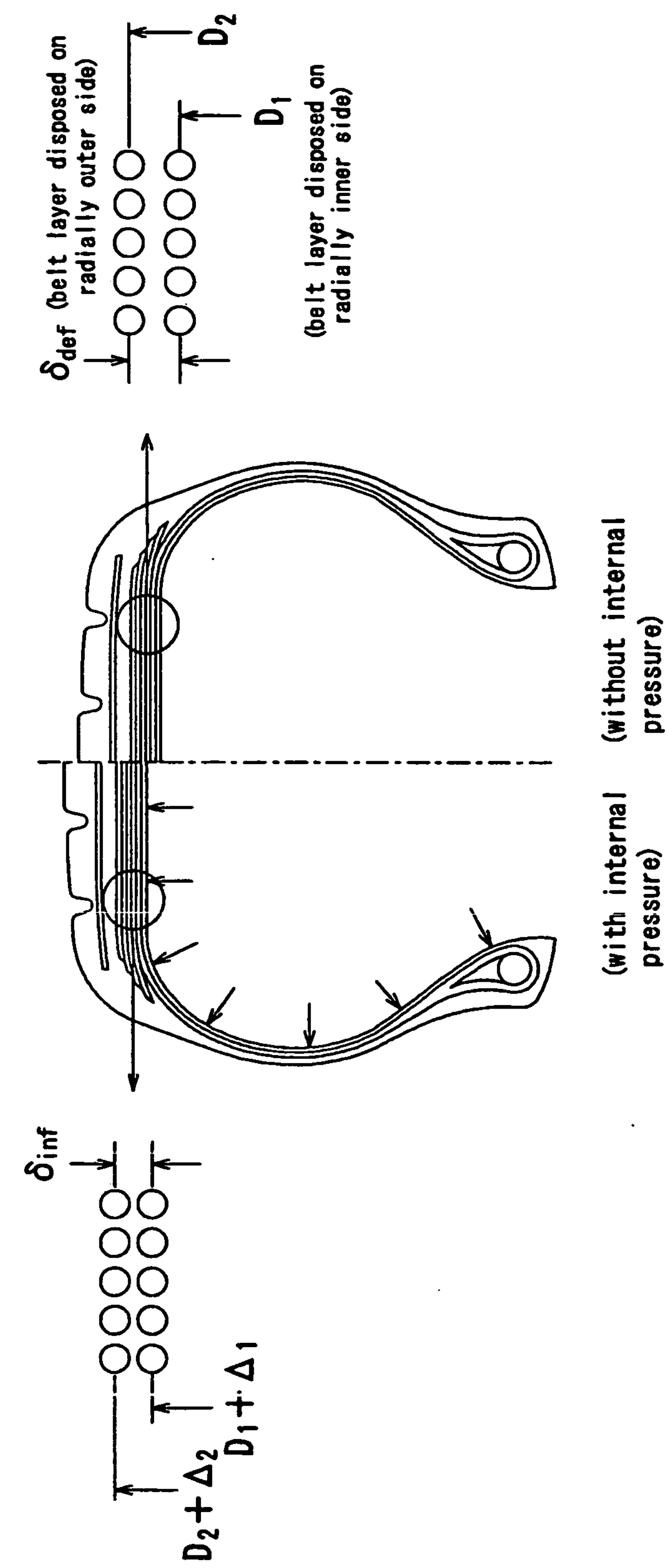
$\delta_{def}$ (belt layer disposed on radially outer side)
$D_2$
$D_1$
(belt layer disposed on radially inner side)
(without internal pressure)
(with internal pressure)
$\delta_{inf}$
$D_2+\Delta_2$
$D_1+\Delta_1$

FIG. 2

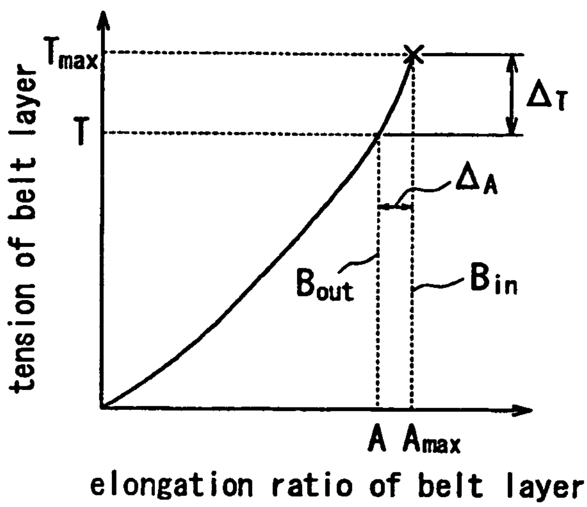
Tmax
T
ΔT
ΔA
Bout
Bin
A
Amax
tension of belt layer
elongation ratio of belt layer

FIG. 3

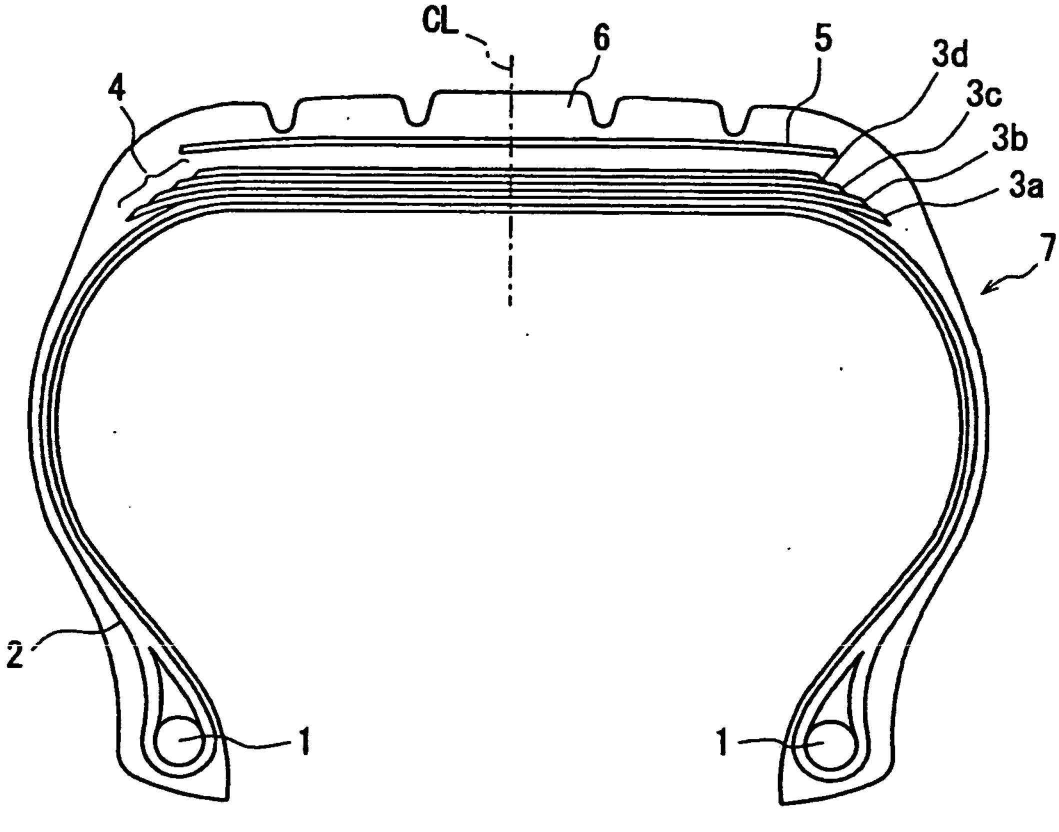

FIG. 4

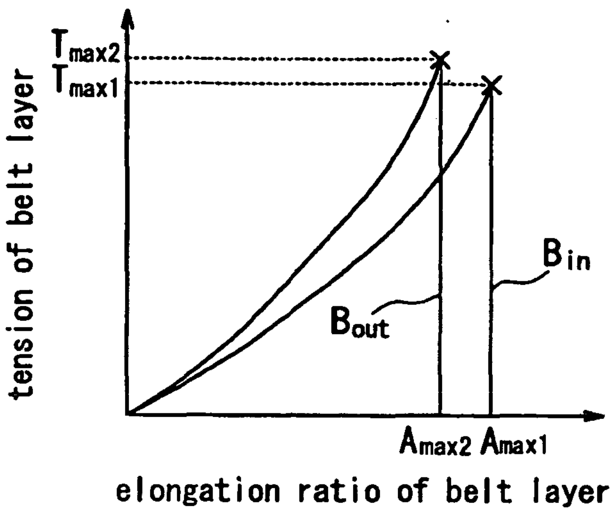

$T_{max2}$
$T_{max1}$
tension of belt layer
$B_{in}$
$B_{out}$
$A_{max2}$ $A_{max1}$
elongation ratio of belt layer


FIG. 5

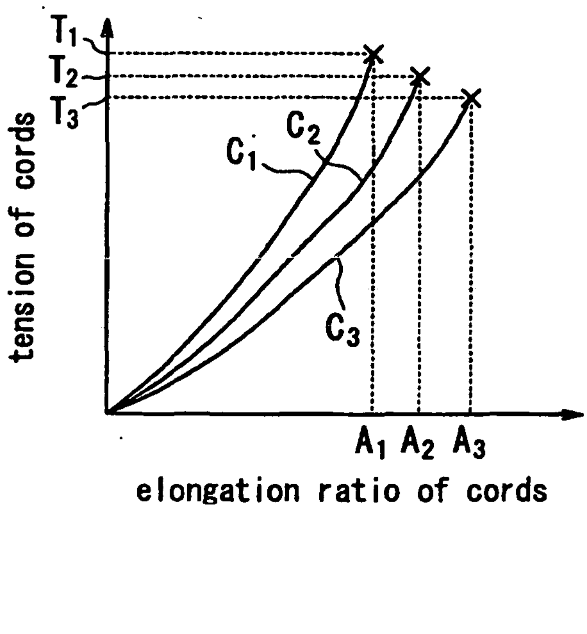

$T_1$
$T_2$
$T_3$
tension of cords
$C_1$
$C_2$
$C_3$
$A_1$ $A_2$ $A_3$
elongation ratio of cords

FIG. 6

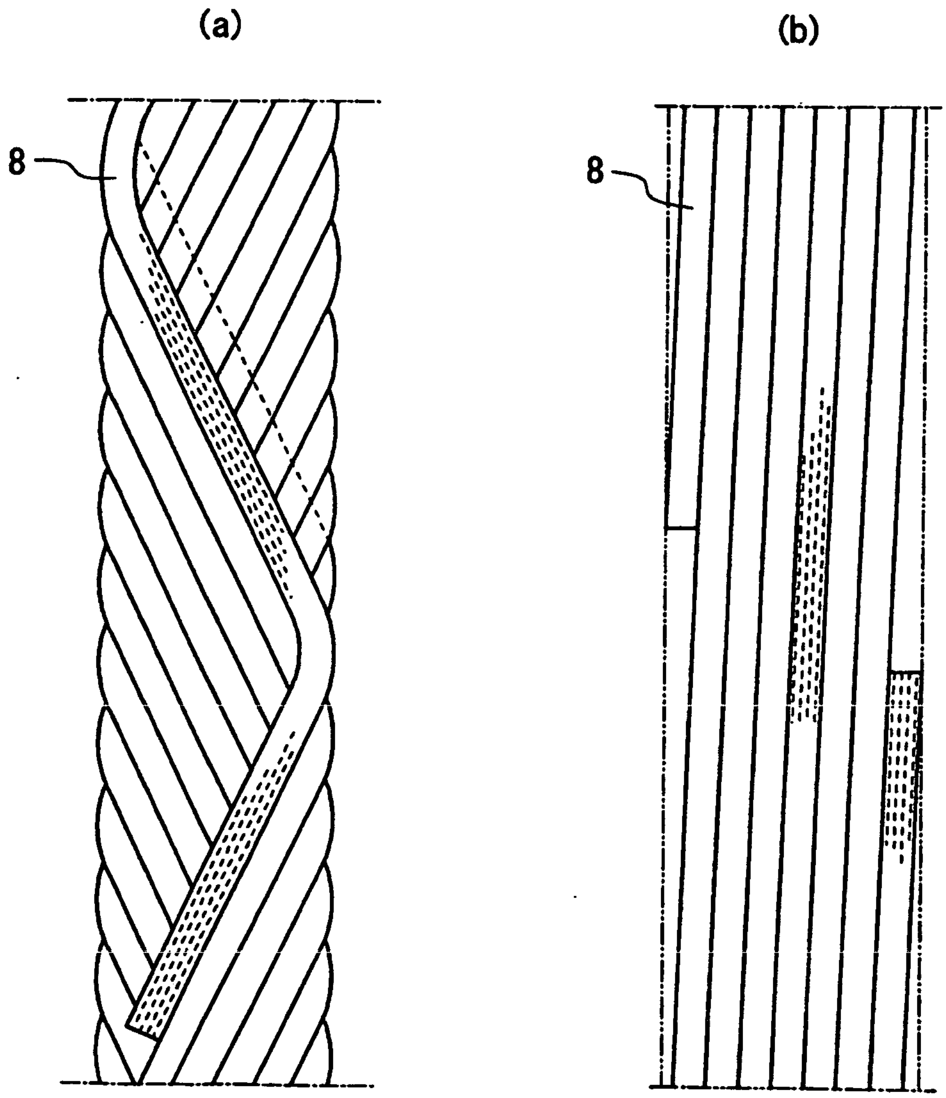

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2003061991 A